Europäisches Patentamt

European Patent Office

Office européen des brevets

(11) Publication number: **0 215 963**
**A1**

## EUROPEAN PATENT APPLICATION

(21) Application number: 85111404.1

(51) Int. Cl.⁴ **G06K 9/58**

(22) Date of filing: 09.09.85

(43) Date of publication of application:
01.04.87 Bulletin 87/14

(84) Designated Contracting States:
AT BE CH DE FR GB IT LI LU NL SE

(71) Applicant: **Seufert, Wolf D.**
**R.R. 5**
**Sherbrooke Quebec J1H 5H3(CA)**
Applicant: **Coté, Roger A.**
**1229, rue Joques**
**Sherbrooke Quebec J1H 2Y2(CA)**

(72) Inventor: **Seufert, Wolf D.**
**R.R. 5**
**Sherbrooke Quebec J1H 5H3(CA)**
Inventor: **Coté, Roger A.**
**1229, rue Joques**
**Sherbrooke Quebec J1H 2Y2(CA)**

(74) Representative: **Prüfer, Lutz H., Dipl.-Phys.**
**Harthauser Strasse 25d**
**D-8000 München 90(DE)**

(54) **Method for and apparatus of line pattern analysis.**

(57) The disclosure herein describes an apparatus and a method of analysis of line patterns such as fingerprints, ideograms, or the like, which comprises the steps of superimposing a centrosymmetric reference pattern of lines over the line pattern to be analyzed to form an interferometric pattern of the moiré type, positioning the reference pattern on a characteristic element of the line pattern to be analyzed, and enlarging it until the lines of the reference pattern fill the space between adjacent lines closest to the characteristic element to thereby translate the superimposed line patterns into a field pattern of different optical densities.

REF. LINE/
SCAN WIDTH
ADJUSTMENT

CAMERA
CONTROL

VIDEO A/D
CONVERTER

INTERFACE

DATA
PROCESSING

OUTPUT

30

32

34

36

FIG.5

0 215 963

1a

# METHOD FOR AND APPARATUS OF LINE PATTERN ANALYSIS

The present invention relates to the analysis of line patterns such as fingerprints, ideograms, or similar patterns.

The analysis of fingerprints, for example, has become the standard method for the positive identification of individuals because of the immense variety of epidermal ridge patterns which, to date, have not been found to repeat themselves, and also because of the invariance of the individual patterns. They do not change with age; the ridges will evolve again as they were before even after an abrasion of the fingertips' epidermis.

The methods of fingerprint pattern analysis are used principally in criminal investigations but also in medicine, genetics, and anthropology, in much the same way as they were introduced by Francis Galton and Edward Henry before the turn of the century. The possibility to analyse and compare fingerprints automatically has been the subject of intense study for the past 25 years with the objectives, firstly, to devise an instrument that could cope with the ever increasing volume of information in police work, and secondly, to reduce the element of bias associated with a subjective interpretation. Lately, it has been realized that the individuality of fingerprints could be the basis for access control systems if an instrument or apparatus were designed that could give a go/no go decision automatically, within a very brief interval after an access request by presentation of a fingerprint, and necessarily within very strict confidence limits of performance.

Fingerprints are classified by assigning a letter or number code to each characteristic element or pattern observed (e.g., 'T' for the tented arch, 'R' for the radial loop, 'W' for the whorl, etc.). The topological constraints on continuous line patterns containing loops or whorls require that triradii exist i.e., star-like forms where a ridge branches into two. An important element in establishing the fingerprint code is the number of ridges between a triradius and the center of the whorl or loop. The final identification formula for an individual's set of fingerprints is given as a sequence of the code letters and numbers for all ten fingers.

The conventional system of fingerprint analysis is slow and expensive since it requires highly trained personnel. As a result, analyses are performed in specialized centers only, and the consequence is an inevitable delay in the decisions rendered on the basis of fingerprint comparisons. Still more time-consuming is a search to find a fingerprint on file to match the imprint of a single finger. However, situations in which a presumed criminal has to be identified on the basis of a single print arise very frequently.

The relatively slow process of compiling and emitting data has spurred the development of computers that could, (a), recognize fingerprints on the basis of a comparison with a register of patterns stored in a memory bank, (b), measure them with a high degree of precision, (c), produce the conventional code, and (d), search their files for a matching print. Computers performing these tasks are available; opto-electric scanners look first for the location of the principal or determinant pattern in a print and, once found, proceed by measuring methodically the line slopes in these patterns as well as other features necessary to establish the code. Another class of computers uses a direct optical comparison and correlation. Neither of the systems has proved reliable in daily use. A certain data reduction in either approach is inevitable and might have been the cause for the unacceptably high 'false reject' as also 'false accept' rates. Some companies that have produced computer analysis systems for fingerprints have now ceased the production of these specialized and highly complicated machines.

The difficulties encountered with automated pattern analysis systems for fingerprints probably derive from the fact that the approach adopted tries to simulate too closely the integrating operations of human eye and brain.

In United States Patent no. 4,025,898 issued May 24, 1977 to Shaw, there is described a method for recording representations of disrupted space patterns, such as fingerprints, so that their classification, comparison and retrieving are simplified. The method makes use of the phenomenon of moiré patterns which consists in the superposition or interference of two periodic structures resulting in an optical image having frequency phase differences. Since fingerprints are a periodic line pattern, another periodic structure is then only required to create the moiré pattern. Hence, in the above patent, moiré interference patterns are created by superimposing a line pattern on a fingerprint, or a print on its own image. When the original and the reference patterns are rotated with respect to each other, the changing interferometric pattern is recorded by a camera; the sequence of lines passing by the camera as well as the variation of amplitude with time of the light signal reflected from, or transmitted through the two superposed patterns expresses the characteristics of the fingerprint. The variation of the moiré pattern is recorded.

It is therefore an object of the present invention to provide a method in which the line pattern in a fingerprint for example is translated into a field pattern of different optical densities. By this method, fingerprints as well as other complex patterns are very easily expressed in recordable forms such as digital code. None of the information contained in the pattern is lost or falsified in the process. Furthermore, the present method gives the correct topological description of the pattern thus extending the present invention to even the most complex problems of pattern recognition.

Contrary to the system described in the above patent, the present invention is concerned with recording a definite interferometric pattern of optical densities resulting from one only possible superposition of ridge pattern and reference pattern.

The present invention therefore relates to a method of analysis of line patterns such as fingerprints, ideograms or like patterns which comprises the steps of: superimposing a centrosymmetric reference pattern of lines over the line pattern to be analyzed to form an interferometric pattern of the moiré type; positioning the reference pattern on a characteristic element of the line pattern to be analyzed, and enlarging it until the lines of the reference pattern fill the space between adjacent lines closest to the characteristic element to thereby translate the superimposed patterns of lines into a field pattern of different optical densities.

In one preferred form of the invention, these optical densities are electronically scanned and measured and the information obtained is stored for subsequent comparison and recognition.

The present invention is also concerned with an apparatus for carrying out this method.

In accordance with the present invention, the intricate line pattern in the case of a fingerprint is expressed in a field pattern of optical densities. All individual characteristics contained in the fingerprint are faithfully reproduced, if in a different form. Since no data reduction is involved, the present method is better suited for the analysis of complex patterns than are computer treatments that search for, and describe mathematically, only the central characteristic element in an imprint while suppressing systematically all other features during the search. With the method given, none of the information contained in the pattern of ridges is lost.

The scope of applicability of the present invention will become apparent from the detailed descripttion given hereinafter; it should be understood however, that this description while indicating preferred embodiments of the invention is given by way of illustration only since various changes and modifications within the spirit and scope of the invention will become apparent to those skilled in the art.

IN THE DRAWINGS

Figures 1(a) and 1(b) illustrate the super imposition of a reference pattern over two fingerprints;

Figures 2(a), 2(b) and 2(c) are examples of the centering procedure of a reference pattern over lines of a pattern to be analysed;

Figures 3(a), 3(b), 3(c) and 3(d) illustrate various types of epidermal ridge patterns in fingerprints giving moiré interferograms;

Figure 4 shows schematically the use of an electronically defined orthogonal grid over a moiré interferogram; and

Figure 5 represents a logic control system to carry out the method of the present invention.

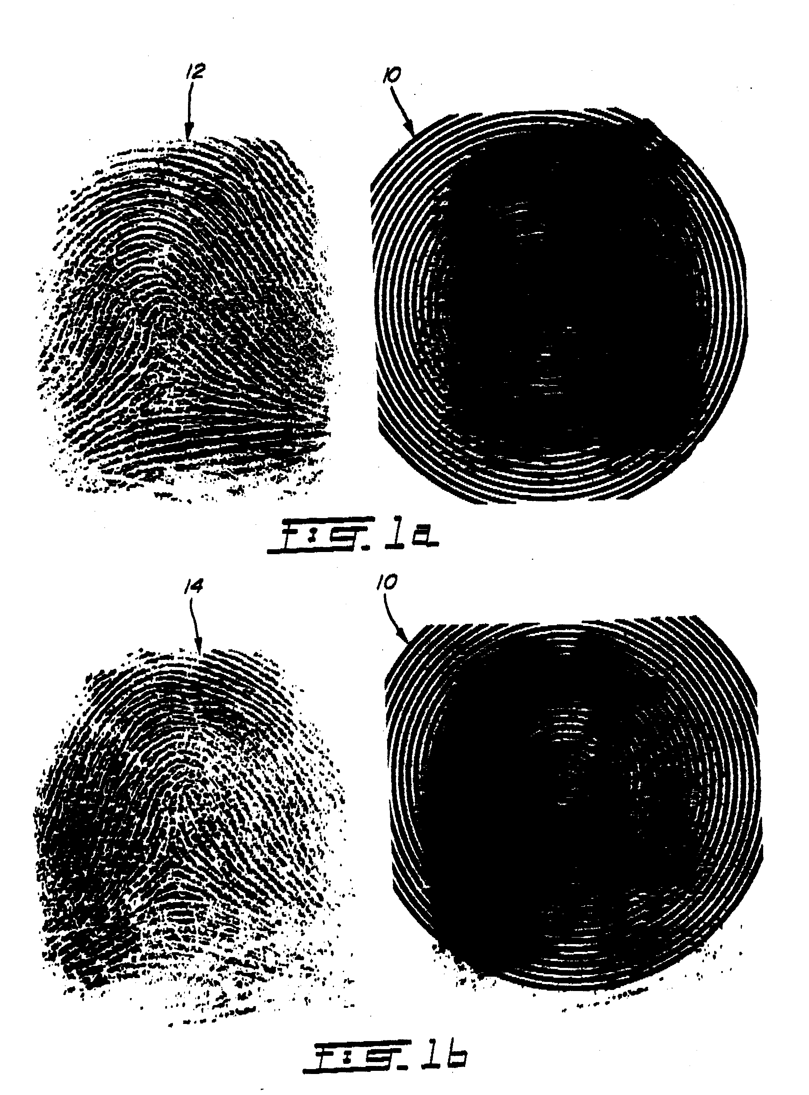

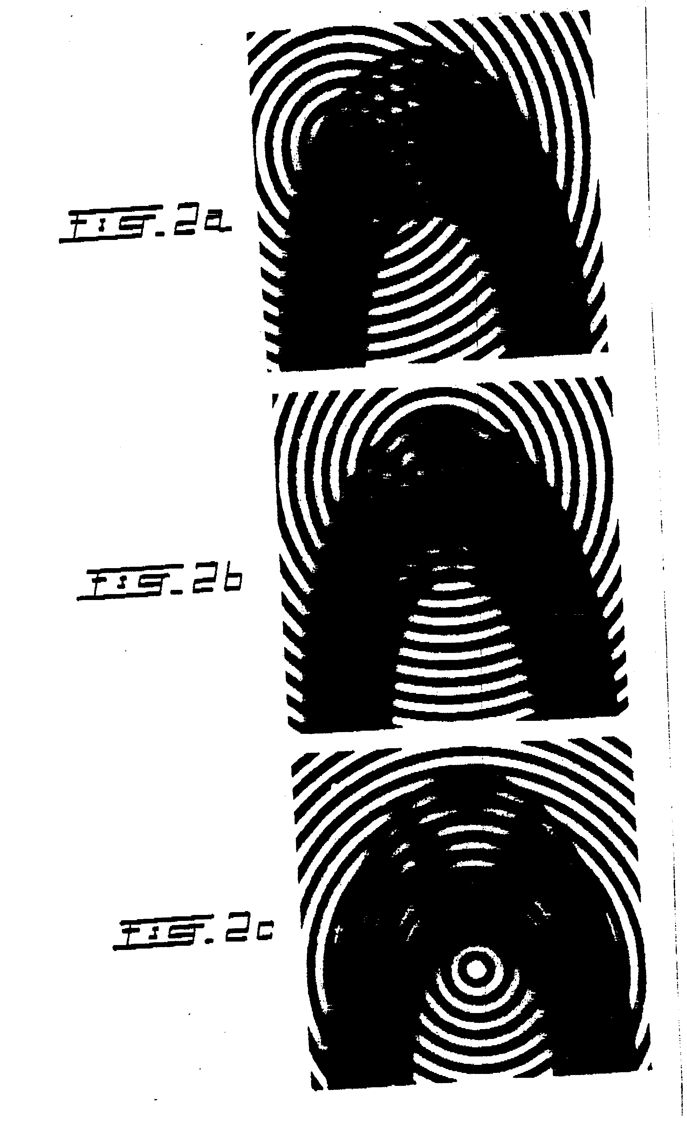

Referring to figures 1(a) and 1(b) a transparent screen 10 of circular centrosymmetric lines (i.e., the reference pattern) is placed over fingerprint images 12 and 14. By this superposition, two distinct interferometric patterns of the moiré type are formed as shown in the right of these figures. It can be seen that the impressions from epidermal ridges running parallel to the lines on the circular screen are emphasized; those intercepting the lines at greater angles are far less conspicuous. Moiré interferograms produced in this way express the individual variations of the imprints since the superposition step is the equivalent of multiplying, by a common factor, each element in the picture to be analysed.

The lines forming this centrosymmetric reference pattern have the same periodicity throughout and are of equal thickness. The reference pattern is centered on the imprints' characteristic element (an arch, loop or whorl).

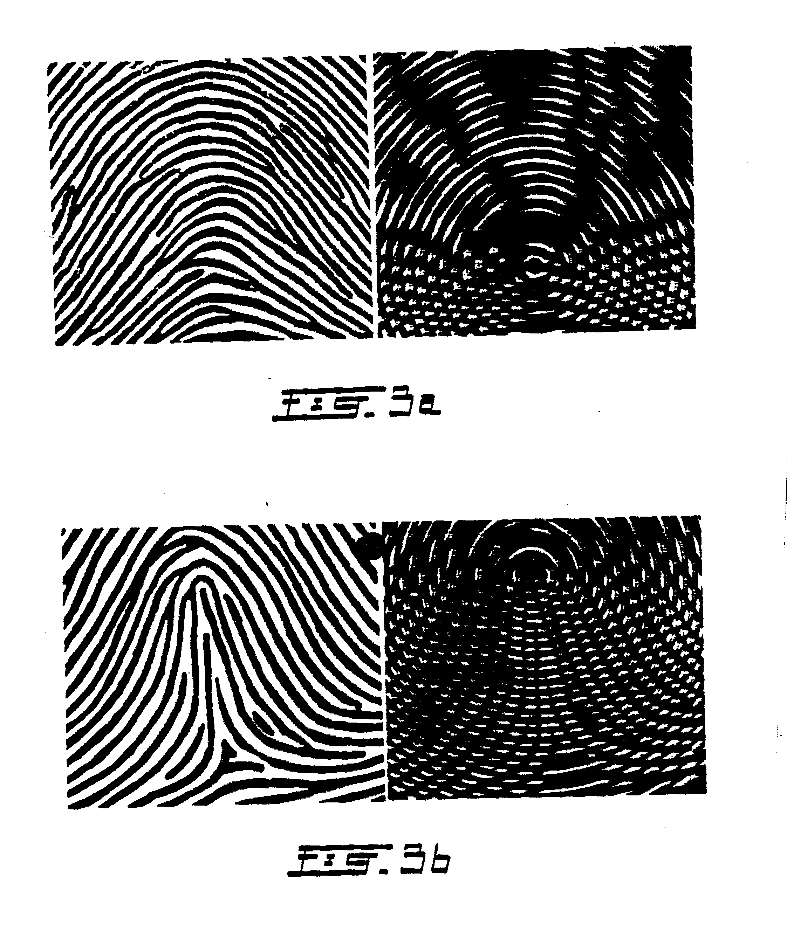

The reference pattern is gradually enlarged until its lines fill the space between the adjacent ridges closest to the center in the fingerprint examined, over the longest possible distance. Thus the ridges and the reference lines running parallel form fields of equal density, distinct from areas where lines intercept at greater angles: with this, the pattern of lines is translated into a field pattern. The correct procedure for centering is demonstrated schematically in figures 2(a), 2(b) and 2(c). Figure 2(a) shows a reference pattern superimposed arbitrarily on a set of arches representing the characteristic element in a fingerprint. Figure 2(b) shows the reference pattern being correctly positioned on the vertical axis only while figure 2(c) shows the correct superposition. Hence, the greatest optical density of interference pattern is directly above the center of the reference pattern and extends over the longest horizontal distance possible.

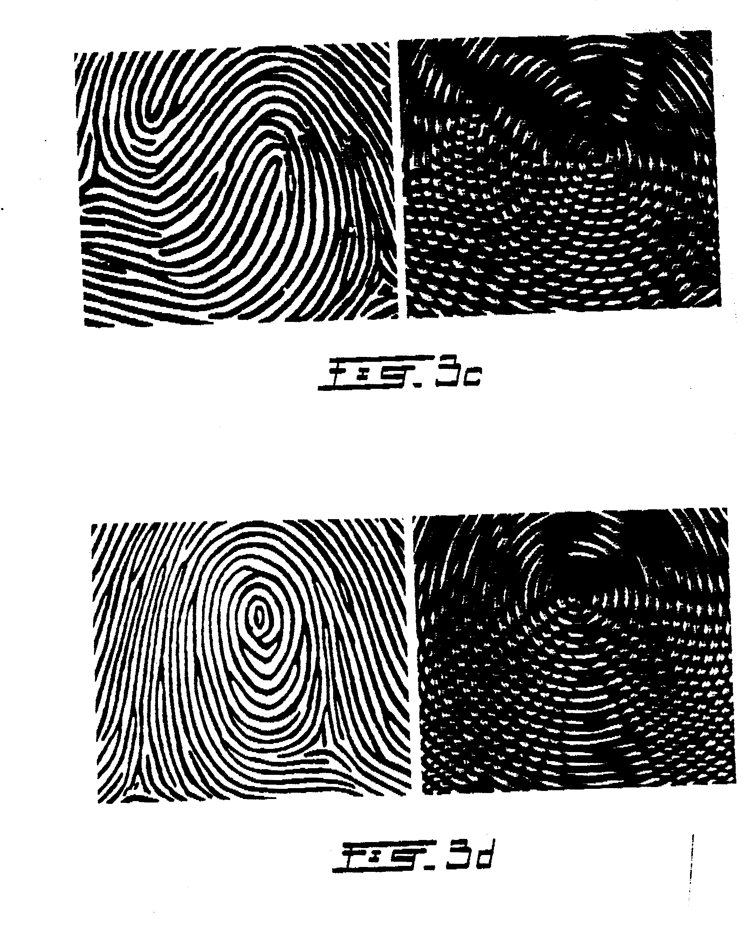

Different types of epidermal ridge patterns in a fingerprint are shown in figures 3(a) for an arch, 3-(b) for a tented arch, 3(c) for a loop and 3(d) for a whorl. In the case of a double loop as illustrated in figure 3(c) where two figures of approximately equal prominence are present, the reference pattern is centered on the lower one.

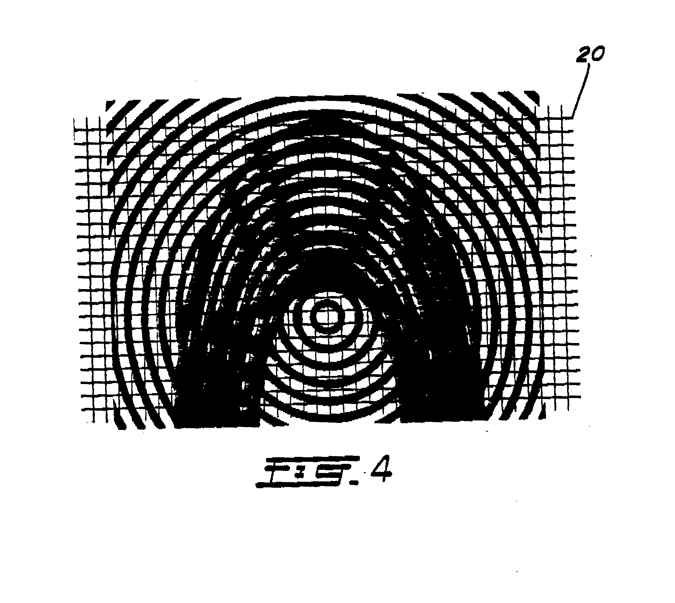

In accordance with the present invention, the intricate line pattern of a fingerprint is expressed in a field pattern of optical densities. The optical density differences can be read with conventional 'flying spot' scanners over an electronically defined grid (Fig. 4); these devices are extremely fast and, with this, the collection of data that constitutes the time-limiting factor in pattern recognition is considerably accelerated. Once digitized, the data are rapidly processed by standard computer techniques. Although the processing speed will increase, the possibility of processing errors will be reduced because of the simplicity of the method.

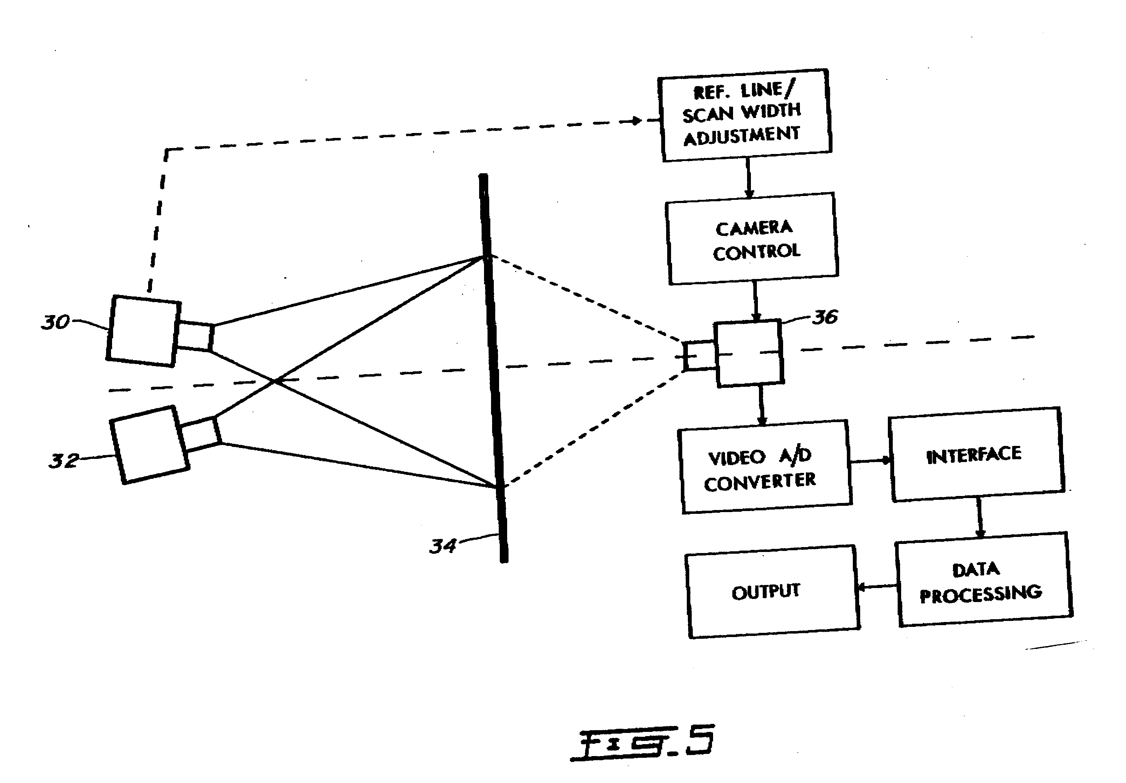

Referring to figure 5, there is shown a simple apparatus to measure and analyse fingerprints by interferometry. The apparatus includes a first projector 30 for the reference pattern, a fingerprint projector 32, a matte-finished glass screen 34 and a 'flying spot' scanning camera 36.

The analysis of a single print gives a string or sequence of digits, e.g. in binary code, of which any length can be compared by computer with a sequence of digits on file. In this way, even partial prints are matched automatically, always provided that the central feature is available for the correct positioning of the reference pattern. The probability of finding a matching print grows in direct proportion to the length of the string of digits available, and the opto-electronic reader should therefore scan the moiré interferograms in both directions, i.e., it should read consecutive lines of the grid end-to-end (palindromic scan). Since the grid will extend beyond the image to be analysed, the computer is programmed to delete any sequence repeating bit '0' more than n (user-defined) times. The threshold at which the opto-electronic device responds with 'on' or '1' is to be given by the proportion to which each of the cells scanned is filled with the pattern. No signal (or '0', or 'off') will be recorded if the cell is traversed only by either, - (a) one line of the reference pattern, (b), the imprint of one ride, or (c), by a combination of the two which does not fill the cell sufficiently. A cell will be filled completely whenever a line in the reference pattern and in the imprint run parallel. Faults in the recorded imprint, for instance because of incomplete inking, will be eliminated by setting the response threshold of the opto-electronic scanner in such a way that it signals 'on' when a cell is filled to 80%. With this, the dimensions of a single measuring cell are delineated: it should be square and one line of the reference pattern alone should fill it to between 50 or 60% of its surface area. These conditions require that the cells grow in the same proportion as the reference pattern is enlarged to fit the imprint.

The translation of a line pattern into a field pattern of optical densities follows the growth of a fingerprint to give always the same characteristic string of digits by which it is recognized. The proportional enlargement of the ridge patterns during the period of growth is normalized by the enlargement of the reference pattern to fit the inter-ridge distances.

One important feature of the present method derives from the fact that the information is collected from single fingerprints. Therefore, the imprint of a single digit found can be compared with any other one on file. This will facilitate considerably the search for a match in a majority of investigations, in all cases where only one or a few prints are available for identification. Neither the analysis nor the application of moiré interferometry requires knowledge whether a digital imprint came from the right or the left hand, information necessary to arrive at the composite formula currently used.

All components of the apparatus required to apply the interferometric method are currently available and in use. In the simplest of a number of apparative configurations (Fig. 5), the fingerprint and the reference pattern are projected separately on a ground-glass screen. The focal length and position of the projector showing the reference pattern are gradually adjusted until it matches the projected print and the correct interferogram is produced. The light intensity levels of the two projecting devices are equalized with a set of neutral density filters, or, by adjusting the lamps' relative input currents. A 'flying spot' scanner located behind the screen advances in controlled horizontal and vertical increments over the interferogram. A video converter expresses the measured signal intensities in binary code, or collects progressive signal intensities between extreme light levels and reduces them to an appropriate set of digits. The information is transmitted through an interface to a microcomputer for further processing, in particular,

(a) to define the fingerprint area,

(b) to store the information collected, and

(c) to output the information in a particular retrieval format, e.g. for rapid telephone transmission.

The projectors for the imprint and the reference pattern can be replaced by any convenient means of superposition permitting a relative size adjustment.

The camera control is set to provide the end-to-end horizontal line scan. The focal length of the zoom lens in the video camera is adjusted to that of the zoom lens in the reference projector in such a way that the dimensions of a cell scanned on the screen relate to the line width of the reference pattern as is required. The entire field scanned extends, for instance, over a distance of 100 cells each in the horizontal and in the vertical direction from the center of the reference pattern. The optical matching is done by hand, or by mechanical or electronic coupling, according to the projection method available in the completed system.

Expressed in digital form, the information contained in a fingerprint is transmitted easily, rapidly, and inexpensively in a variety of ways. This brings out the additional advantage that the field pattern of optical densities resulting from the analysis described can be reconstructed in remote locations, without any loss of information. The digitized moiré interferograms of any of the individual's single fingerprints, or of a combination of several prints, could be kept on file, for instance, at a data bank to be addressed, and are supplemented by a qualifying act when access is requested. The qualifying code could be any selected string, or strings, of digits, from any single print or from a combination thereof. Alternatively, any coordinate of any print on file can be remotely addressed and its content questioned for confirmation. Such an access control system would enjoy a very high degree of confidence because of the individuality and the inherent flexibility of the code.

The string of bits in binary code coming from a matrix of 100x100 cells in the field seen expresses the individuality of a fingerprint in a most reliable fashion: the probability of finding an interferogram to match is given by the product of the probabilities of finding the correct match in each of the 10,000 cells and is, at 1 out of $2\exp[+10,000]$ cases, extremely small. Therefore, one could admit a certain number of errors (for incomplete inking of the print, etc.) without losing the advantage of great reliability, or, one could scan a smaller field. Modern cameras scan a matrix of 100x100 cells easily in less than 1 second.

## Claims

1. A method for analysis of line pattern, such as fingerprints, ideograms, or like patterns, comprising the steps of:

-superimposing a centrosymmetric reference pattern of lines over the line pattern to be analysed to form an interferometric pattern of the moiré type;

-positioning said reference pattern on a characteristic element of said line pattern to be analysed.

2. A method as claimed in claim 1, characterized by

-adjusting said reference pattern until the lines thereof fill the space between adjacent lines closest to said characteristic element whereby said superimposed line patterns are translated into a field pattern of different optical densities.

3. A method as defined in claims 1 or 2, wherein said positioning step consists in gradually enlarging the reference pattern until the lines thereof fill said space.

4. A method as defined in one of claims 1 to 3, characterized by scanning and electronically measuring said optical densities and storing data pertaining to said measurement.

5. A method as defined in claim 1, 2 or 4 wherein the lines of said centrosymmetric reference pattern are circular.

6. A method as claimed in one of claims 1 to 5, characterized in that an opto-electronic transducer is used to scan the superimposed patterns and to measure the optical densities over an electronically defined orthogonal grid, the method further comprising: adjusting said grid with said reference pattern; the adjusting steps for said reference pattern and said grid consisting in gradually enlarging said reference pattern and said grid; both enlargements being in the same proportion.

7. An apparatus for analysing line patterns such as fingerprints, ideograms or like patterns, comprising:

-a centrosymmetric reference pattern of lines adapted to be superimposed over a line pattern to be analysed to form an interferometric pattern of the moiré type;

-means for adjusting said reference pattern relative to said pattern to be analysed whereby the lines of said reference pattern fill the space between adjacent lines closest to a characteristic element on said line pattern to be analysed to thereby translate said superimposed line pattern into a field pattern of different optical densities;

-means for electronically scanning and measuring said optical densities.

8. An apparatus as defined in claim 7, characterized in that said centrosymmetric reference pattern is part of a transparent screen.

9. An apparatus as defined in claim 7 or 8, characterized in that said scanning and measuring means include an opto-electronic transducer and an orthogonal grid containing unit cells.

10. An apparatus as defined in one of claims 7 to 9, characterized in that said scanning and measuring means include means for digitizing the optical density measured in each cell; means for storing the digits in the sequence encountered by the scanning and measuring means.

11. A apparatus as defined in one of claims 7 to 10, characterized by first projector means for projecting on a transparent screen a fingerprint and said reference pattern; means for adjusting gradually the focal length of a second projector means, and means for equalizing the intensity levels of said first and second projector means (30, 32); said scanning and measuring means consisting of a flying spot scanner (36) located behind said screen (34); means for advancing said scanner (36) in preset horizontal and vertical increments over the superimposed patterns.

_FIG. 1a_

_FIG. 1b_

FIG.2a

FIG.2b

FIG.2c

FIG. 3a

FIG. 3b

FIG. 3c

FIG. 3d

FIG. 4

REF. LINE/
SCAN WIDTH
ADJUSTMENT

CAMERA
CONTROL

36

VIDEO A/D
CONVERTER

INTERFACE

OUTPUT

DATA
PROCESSING

30

32

34

0 215 963

FIG.5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | GB-A-1 509 095 (SPERRY RAND CORP.) * Page 2, line 96 - page 3, line 64; figure 1 * | 1,6,7-10 | G 06 K 9/58 |
| A | PATENTS ABSTRACTS OF JAPAN, vol. 7, no. 202 (P-221)[1347], 7th September 1983; & JP - A - 58 99 883 (MITSUBISHI DENKI K.K.) 14-06-1983 * The whole document * | 1,7-10 | |
| D,A | US-A-4 025 898 (LEW SHAW) * Column 4, lines 4-58 * | 1,7-10 | |

TECHNICAL FIELDS
SEARCHED (Int. Cl.4)

G 06 K 9/58
G 06 K 9/36
G 06 K 9/60
G 06 K 9/82
G 06 K 9/38
A 61 B 5/10

The present search report has been drawn up for all claims

| Place of search | Date of completion of the search | Examiner |
|---|---|---|
| THE HAGUE | 25-05-1986 | BAMBRIDGE |

EPO Form 1503 03 82